# EUROPÄISCHE PATENTSCHRIFT

(11) **EP 0 819 320 B1**
(45) Veröffentlichungstag und Bekanntmachung des Hinweises auf die Patenterteilung: **16.06.1999**
(21) Anmeldenummer: 96907257.8
(22) Anmeldetag: 22.03.1996
(51) Int. Cl.: H01M 8/10

(54) **BRENNSTOFFZELLE MIT FESTEN POLYMERELEKTROLYTEN**
FUEL CELL WITH SOLID POLYMER ELECTROLYTES
PILE A COMBUSTIBLE AVEC ELECTROLYTES POLYMERES SOLIDES

(30) Priorität: 07.04.1995 DE 19513292
(43) Veröffentlichungstag der Anmeldung: 21.01.1998
(73) Patentinhaber: SIEMENS AKTIENGESELLSCHAFT, 80333 München (DE)
(72) Erfinder: HAMMERSCHMIDT, Albert, D-91056 Erlangen (DE); DOMKE, Wolf-Dieter, D-91341 Röttenbach (DE); NÖLSCHER, Christoph, D-90419 Nürnberg (DE); SUCHY, Peter, D-91054 Erlangen (DE)
(86) Internationale Anmeldenummer: DE9600497
(87) Internationale Veröffentlichungsnummer: WO9631913

(56) Entgegenhaltungen:
- WO-A-94/14203
- US-A- 5 399 184
- JOURNAL OF THE ELECTROCHEMICAL SOCIETY, Bd. 138, Nr. 11, 1.November 1991, Seiten 3190-3193, XP000325085 YOSHIHARU UCHIMOTO ET AL: "THIN CATION-EXCHANGER FILMS BY PLASMA POLYMERIZATION OF 1,3-BUTADIENE AND METHYL BENZENESULFONATE"
- EXTENDED ABSTRACTS, Bd. 93/1, 1.Januar 1993, Seite 48 XP000421655 YASUDA K ET AL: "PREPARATION OF THIN PERFLUOUSULFONATE CATION-EXCHANGER FILMS BY PLASMA POLYMERIZATION FOR PEMFC"
- CHEMICAL ABSTRACTS, vol. 119, no. 6, 9.August 1993 Columbus, Ohio, US; abstract no. 52795h, YASUDA KAZUAKI ET AL: "Preparation of thin perfluorosulfonate cation-exchanger films by plasma polymerization for PEMFC" XP000401193 & PROC.-ELECTROCHEM SOC., Bd. 93, Nr. 8, 1993, Seite 292-301

## Beschreibung

Die Erfindung betrifft eine Brennstoffzelle mit einer protonenleitenden Membran, an der auf beiden Seiten Katalysatormaterial und je ein Kollektor angeordnet ist.

Brennstoffzellen dienen zur elektrochemischen Umwandlung von chemischer Energie, insbesondere in Form von gasförmigem Wasserstoff und Sauerstoff, in elektrische Energie. Aus der Vielzahl bekannter Typen werden, beispielsweise für den mobilen Einsatz, sogenannte PEM-Brennstoffzellen (PEM = Polymer-Elektrolyt-Membran) bevorzugt. Die Vorteile derartiger Brennstoffzellen liegen in einer vergleichsweise niedrigen Betriebstemperatur (bis ca. 100°C), im Fehlen eines korrosiven flüssigen Elektrolyten, in der Unempfindlichkeit gegen Kohlendioxid (CO₂) und letztlich in einem relativ einfachen mechanischen Aufbau. Neben dem Zellgehäuse, Kühleinheiten bzw. Separatoren, Mitteln zur Gasversorgung bzw. -verteilung und Mitteln zum Aufbau von Brennstoffzellenstapeln (Stacks) aus einzelnen Elementen bestehen PEM-Brennstoffzellen nämlich im wesentlichen aus zwei gasdurchlässigen, porösen, elektrisch leitfähigen Kollektoren auf der Anoden- und der Kathodenseite, welche der Festelektrolytmembran benachbart sind.

Zwischen Kollektor und Membran befindet sich jeweils ein Katalysator in feinverteilter, katalytisch aktiver Form, beispielsweise Platin oder eine Platinlegierung. Je eine Seite der Brennstoffzelle wird mit Brenngas, insbesondere Wasserstoff oder ein wasserstoffhaltiges Gas, und mit einem Oxidans, insbesondere Sauerstoff oder ein sauerstoffhaltiges Gas, wie Luft, versorgt. An der Anode wird Wasserstoff oxidiert, wobei Protonen entstehen, welche durch die Membran zur Sauerstoffseite diffundieren; dabei wird in der Regel Wasser mitgeschleppt (sogenannter Drag-Effekt). An der Kathode rekombinieren die Protonen mit reduziertem Sauerstoff zu Wasser, sogenanntes Produktwasser, welches in geeigneter Weise aus der Brennstoffzelle entfernt wird.

Durch den Drag-Effekt wird der Anodenseite der Membran Wasser entzogen, so daß diese austrocknet und damit ihre Funktion verliert, wenn nicht genügend Wasser nachgeliefert wird. Weitere Probleme sind die hohen Kosten bei der Herstellung der Membran und der Mangel an kostengünstigen Prozessen zur Herstellung von Membran/Elektroden-Einheiten mit niedriger Katalysatorbelegung und hoher Leistungsdichte, insbesondere bei Luftbetrieb nahe Atmosphärendruck. Bei relativ dicken Membranen wirken nämlich die ohmschen Verluste leistungsmindernd.

Technische Lösungen für Brennstoffzellen sind bereits bekannt (siehe beispielsweise DE-OS 33 21 984 und EP-OS 0 560 295). Als gasdurchlässige, elektronenleitende Schichten, d.h. Kollektoren, werden dabei Kohlepapier (US-PS 4 215 183) und Kohlegewebe verwendet ("J. Appl. Electrochem.", Vol. 22 (1992), Seiten 1 bis 7); auch Metallstrukturen kommen in Frage (DE-OS 42 06 490). Als protonenleitende Membranen dienen perfluorierte, sulfonierte Polymere, wie Nafion, Raymion und Permion ("Ber. Bunsenges. Phys. Chem.", Bd. 94 (1990), Seiten 1008 bis 1014). Die Schichtdicke der Membranen liegt, auch aus Gründen der Handhabbarkeit, zwischen 50 und 200 µm. Wichtige Eigenschaften der Membranen sind thermische Beständigkeit (bis ca. 100°C), reduktive und oxidative Stabilität, Säureund Hydrolysebeständigkeit, ausreichend niedriger spezifischer elektrischer Widerstand (< 10 Ω·cm) bei gleichzeitiger Ionenleitung (H⁺), niedrige Wasserstoff- bzw. Sauerstoffpermeation und Pin-hole-Freiheit. Gleichzeitig sollen die Membranen möglichst hydrophil sein, um durch vorhandenes Wasser sowohl eine Protonenleitung sicherzustellen als auch - durch Gegendiffusion von Wasser zur Anode - ein Austrocknen der Membran und damit eine Verringerung der elektrischen Leitfähigkeit zu verhindern. Im allgemeinen werden derartige Eigenschaften mit Materialien erreicht, welche keine aliphatischen Wasserstoff-Kohlenstoff-Bindungen besitzen, was beispielsweise durch den Ersatz von Wasserstoff durch Fluor oder durch das Vorhandensein aromatischer Strukturen erreicht wird; die Protonenleitung ergibt sich durch den Einbau von Sulfonsäuregruppen (hohe Säurestärke).

Für die Funktionsfähigkeit einer Brennstoffzelle sind die zwischen den Kollektoren und der protonenleitenden Membran angeordneten Elektroden wesentlich, d.h. die Katalysatorschichten. An diesen Schichten, die aus feinstverteiltem Katalysatormaterial bestehen, das beispielsweise auch auf Kohlenstoff aufgebracht sein kann, laufen die fundamentalen Prozesse ab, nämlich Wasserstoffadsorption, -dissoziation und -oxidation auf der Anodenseite bzw. die entsprechende Reduktion von Sauerstoff auf der Kathodenseite. Die Schichten müssen ausreichend gasdurchlässig und katalytisch aktiv sein, d.h. eine große innere Oberfläche aufweisen, wobei die Menge an Katalysator, wie Platin, aus Wirtschaftlichkeitsgründen möglichst niedrig sein sollte. Brennstoffzellenelektroden benötigen derzeit beispielsweise Platinmengen zwischen 3 mg/cm² (EP-OS 0 560 295) und 0,095 mg/cm² (EP-OS 0 569 062) bzw. 0,07 mg/cm² ("J. Electrochem. Soc.", Vol. 139 (1992), Seiten L28 bis L30). Um einen innigen Kontakt zwischen Kollektor, Elektrode (= Katalysator) und Membran zu gewährleisten, werden die Schichten meist heiß verpreßt. Die Gehäuse der einzelnen Brennstoffzellen sind so ausgelegt, daß sowohl eine gute Gasversorgung gewährleistet ist als auch das Produktwasser gut abtransportiert werden kann. Um eine ausreichende Leistung zu erhalten, werden Brennstoffzellen meist zu Stapeln verbunden, wobei die genannten Anforderungen konstruktiv erfüllt sind.

Es ist zwar bekannt, eine interne Befeuchtung durch dünne Membranen zu erreichen (WO 92/13365), dies wird aber durch die minimal handhabbare Schichtdicke (> 50 µm) begrenzt. Ferner ist es bereits bekannt (US-PS 5 242 764), auf Elektroden dünne Membranen (> 20 µm) naßchemisch aufzubringen und anschließend zu pressen (Gesamtdicke > 40 µm). Diese Vorgehensweise ist aufgrund des naßchemischen Verfahrens allerdings eingeschränkt, beispielsweise hinsichtlich Schichtdicke und Materialverlusten im Prozeß, und ferner wird dadurch keine Lösung aufgezeigt, wie die Planaritätsanforderungen an die Kollektoroberfläche, insbesondere bei dünneren Membranen, erfüllt werden können. Außerdem weist die verwendete Elektrode eine Platinbelegung von 1 mg/cm² auf und ist damit weit von den Anforderungen hinsichtlich hoher Leistungsdichte und niedriger Kosten entfernt. Darüber hinaus wird die Membran/ Elektroden-Einheit am Rand durch eine diese Einheit überlappende Membran mit zentraler Öffnung abgedichtet. Dies ist aber sehr schwierig und umständlich zu realisieren, weil die dichtende Membran ebenfalls sehr dünn sein muß; außerdem ist eine Abstufung der Membran sehr aufwendig.

Bei der derzeitigen Technologie können noch weitere Probleme auftreten. So haben beispielsweise Kollektoren aus Graphitpapier oder Kohlegewebe, auch wenn sie bei hohem Druck verpreßt sind, zum Teil nur punktuell Kontakt mit dem Katalysatormaterial. Die Elektronen können dann nur erschwert von der Elektrode zum Kollektor fließen. Die Herstellung der Membranen erfolgt derzeit nach konventionellen naßchemischen Verfahren (Polymerisation, Sulfonierung), dies führt aber zwangsläufig zu Entsorgungsproblemen und zu einer Umweltbelastung.

Aufgabe der Erfindung ist es, eine Brennstoffzelle mit einer protonenleitenden Membran, bei der auf beiden Seiten Katalysatormaterial und je ein Kollektor angeordnet ist, derart auszugestalten, daß einerseits der Innenwiderstand der Membran verringert und ein Austrocknen auf der Brennstoffseite verhindert wird und andererseits eine wirtschaftliche Herstellung der Membran möglich ist.

Dies wird erfindungsgemäß dadurch erreicht, daß die Kollektoren auf der der Membran zugewandten Seite mit einem elektrisch leitfähigen, gasdurchlässigen Kohlenstoff-Aerogel mit einer Rauhigkeit < 2 µm versehen sind, daß auf das Kohlenstoff-Aerogel jeweils eine Katalysatorschicht aus Platin oder einer Platinlegierung stoffschlüssig aufgebracht ist, und daß sich zwischen den Katalysatorschichten eine plasmachemisch abgeschiedene Membran mit einer Schichtdicke zwischen 3 und 50 µm befindet.

Ein wesentliches Merkmal der Brennstoffzelle nach der Erfindung, die als "Dünnschichtbrennstoffzelle" bezeichnet werden kann, ist das Kohlenstoff-Aerogel. Dieses Material, das an sich bekannt ist (siehe dazu beispielsweise: "J. Appl. Phys.", Vol. 73 (1993), Seiten 581 bis 584), wird - durch ein geeignetes Verfahren - auf einen Kollektor aufgebracht. Der Kollektor besteht vorzugsweise aus Graphitpapier oder Kohlenstoffgewebe und ist vorteilhaft hydrophobiert, beispielsweise mit Polytetrafluorethylen.

Das Kohlenstoff-Aerogel besitzt vorzugsweise eine spezifische elektrische Leitfähigkeit zwischen 10⁻² und 10³ Ω⁻¹·cm⁻¹ und eine Dichte zwischen 0,06 und 0,7 g/cm³; die Porengröße liegt zwischen 20 und 100 nm (Porosität bis zu ca. 95 %). Durch die Wahl der Ausgangsmonomere und durch die Prozeßführung sowie durch eine entsprechende Nachbehandlung kann die Hydrophobizitat des Kohlenstoff-Aerogels eingestellt werden. Die wesentliche Aufgabe des Kohlenstoff-Aerogels besteht darin, die sehr unebene Oberflächenstruktur von Graphitpapier und Kohlenstoffgewebe weitgehend lokal zu planarisieren (Rauhigkeit < 2 µm). Dadurch wird einerseits ein inniger Kontakt zwischen Kollektor und Katalysatormaterial ermöglicht, und andererseits stellt das Kohlenstoff-Aerogel ein hinreichend planares Substrat dar, um eine relativ dünne Membran plasmachemisch abscheiden zu können.

Auf das Kohlenstoff-Aerogel wird in dünner Schicht der Katalysator aufgebracht. Dies erfolgt vorteilhaft mittels eines plasmachemischen Prozesses, wobei in einem Plasmaabscheidereaktor, beispielsweise in einem Niederdruckplasma zwischen 10⁻⁴ und 10 mbar, aus einer bei diesen Drücken gasförmigen organischen Platinverbindung, wie Trimethylcyclopentadienylplatin, Platin in dünner poröser Schicht abgeschieden wird; die Anregung kann durch Hochfrequenz, Mikrowellen oder einen ECR-Sender (ECR = Elektronen-Cyclotron-Resonanz) erfolgen. Derartige Schichten weisen einen spezifischen elektrischen Widerstand < 1 mΩ·cm auf, beispielsweise einen spezifischen Widerstand von ca. 20 µΩ·cm. Alternativ können zur Erzeugung der Platinschichten aber auch Sputterverfahren und andere Abscheideverfahren eingesetzt werden (siehe dazu: "J. Electrochem. Soc.", Vol. 139 (1992), Seiten L28 bis L30).

Die Katalysatorschicht ist an der protonenleitenden Membran angeordnet, die eine Schichtdicke zwischen 3 und 50 µm aufweist, vorzugsweise zwischen 5 und 20 µm. Diese Membran, die mittels eines Plasmapolymerisationsprozesses hergestellt wird, weist - im feuchten Zustand - vorzugsweise einen spezifischen elektrischen Widerstand < 10 Ω·cm auf. Die plasmachemische Abscheidung erfolgt vorteilhaft in einem durch Hochfrequenz, Mikrowellen oder einen ECR-Sender angeregten Niederdruckplasma zwischen 10⁻⁴ und 10 mbar unter Verwendung von bei diesen Drücken gasförmigen Monomeren. Geeignete Monomere sind beispielsweise perfluorierte Verbindungen, wie Octafluorcyclobutan und Perfluorbenzol, oder auch Monomere mit C-H-Bindungen, welche im Plasmapolymerisat keine aliphatischen H-Atome bilden, die Angriffsstellen für einen oxidativen Abbau sein könnten. Die protonenleitende Eigenschaft der Membran wird dadurch erreicht, daß dem Prozeßgas geeignete Gase zugemischt werden, wie SO₂, SO₃, Trifluormethansulfonsäure oder dessen Fluorid, stark saure Carbonsäuren, wie Trifluoressigsäure, und flüchtige Phosphorsäureverbindungen (siehe dazu: "Ber. Bunsenges. Phys. Chem.", Bd. 98 (1994), Seiten 631 bis 635).

Die Prozesse der Plasmaabscheidung von Katalysator und Membran können teilweise auch gleichzeitig stattfinden. Auf diese Weise kann eine innige Verbindung von Katalysator und protonenleitendem Polymer (Ionomer) über die membrannahen Elektrodenbereiche realisiert werden. Die Poren zwischen den Katalysatorteilchen können dabei, wegen der geringen Belegung (beispielsweise ca. 0,1 mg Pt/cm²), ganz oder teilweise mit Ionomer gefüllt sein.

An der protonenleitenden Membran ist eine weitere Katalysatorschicht angeordnet. Diese Schicht kann ebenfalls plasmachemisch direkt auf der Membran abgeschieden werden, sie kann aber auch durch andere Techniken aufgebracht werden. Anschließend wird an dieser Katalysatorschicht der zweite Kollektor angeordnet, der im allgemeinen aus dem gleichen Material besteht wie der erste Kollektor, und dann wird die gesamte Anordnung zusammengepreßt.

Alternativ kann zur Herstellung der Brennstoffzelle eine komplette planare Anordnung, bestehend aus Katalysatormaterial und Kollektor, auf die Membran gepreßt werden. Voraussetzung ist auch hierbei eine hinreichende Planarität zur Erzielung eines guten Kontaktes, was durch eine Schicht aus Kohlenstoff-Aerogel erreicht wird. Eine weitere Herstellungsmöglichkeit besteht darin, auf die zweite Elektrode ebenfalls eine Membran abzuscheiden und die Dünnschichtbrennstoffzelle dann aus den beiden gleich aufgebauten Komponenten durch einen Fügeprozeß zusammenzusetzen, beispielsweise durch Pressen. Hierbei wird die Gefahr von Pin-holes stark reduziert.

Für den Aufbau der Brennstoffzelle nach der Erfindung ist ein Fügekonzept von Vorteil, bei dem die beiden Kollektoren eine unterschiedliche Größe haben. Auf diese Weise wird nämlich eine gasdichte, elektrisch isolierende Verbindung zwischen Anoden- und Kathodenraum ermöglicht. Eine derartige Abdichtung ist sowohl bei einer üblichen Zellkonstruktion möglich, wie sie beispielsweise aus der DE-OS 33 21 984 bekannt ist, als auch bei einem innovativen Konzept, das Gegenstand der DE-PS 44 42 285 ist.

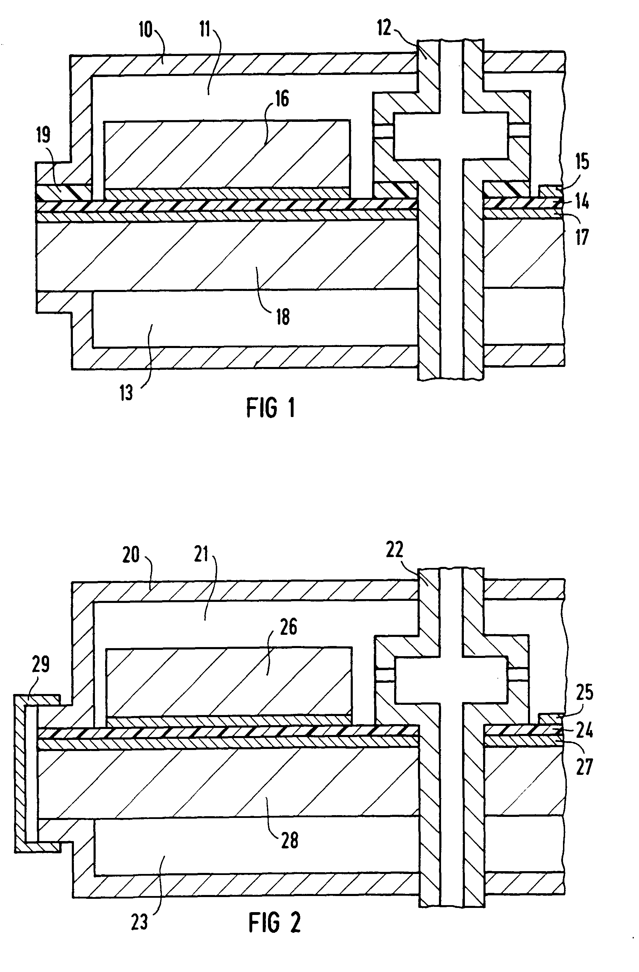

In Figur 1 ist das Fügekonzept für die Membran/Elektroden-Einheit einer bekannten Brennstoffzelle mit Luftbetrieb dargestellt. Hier wird ein zusätzliches Dichtmaterial verwendet, das nicht aus dem Material der Membran bestehen muß und beispielsweise auch die gesamten Ränder der Membran/Elektroden-Einheit umschließen kann. Figur 2 zeigt das Fügekonzept an der Zellkonstruktion der vorstehend genannten innovativen Brennstoffzelle.

In den Figuren 1 und 2 haben die angegebenen Bezugsziffern folgende Bedeutung:
10, 20: Zellgehäuse
11, 21: Wasserstoff-Gasraum
12, 22: Gasrohr
13, 23: Luft-Gasraum
14, 24: Membran
15, 25: Anode
16, 26: Kollektor
17, 27: Kathode
18, 28: Kollektor
19: Dichtung
29: Klammer

Der Aufbau der Brennstoffzelle nach der Erfindung löst die bei herkömmlichen Brennstoffzellen auftretenden Probleme folgendermaßen:
- Durch die geringe Schichtdicke ergibt sich ein niedriger Schichtwiderstand und eine hohe Rückdiffusion von Wasser, d.h. die Membran trocknet nicht aus;
- aufgrund der glatten Schicht aus Kohlenstoff-Aerogel ist ein inniger Kontakt zwischen der Elektroden/Membran-Einheit und dem Kollektor möglich;
- aus der niedrigen Katalysatorbelegung resultiert ein wirtschaftlicher Herstellungsprozeß;
- das Herstellungsverfahren ist umweltfreundlich, da Vakuumprozesse Anwendung finden.

## Patentansprüche

1. Brennstoffzelle mit einer protonenleitenden Membran, an der auf beiden Seiten Katalysatormaterial und je ein Kollektor angeordnet ist, **dadurch gekennzeichnet,**
- daß die Kollektoren (16, 18) auf der der Membran (14) zugewandten Seite mit einem elektrisch leitfähigen, gasdurchlässigen Kohlenstoff-Aerogel mit einer Rauhigkeit < 2 µm versehen sind,
- daß auf das Kohlenstoff-Aerogel jeweils eine Katalysatorschicht (15, 17) aus Platin oder einer Platinlegierung stoffschlüssig aufgebracht ist,
- und daß sich zwischen den Katalysatorschichten (15, 17) eine plasmachemisch abgeschiedene Membran (14) mit einer Schichtdicke zwischen 3 und 50 µm befindet.

2. Brennstoffzelle nach Anspruch 1, **dadurch gekennzeichnet**, daß das Kohlenstoff-Aerogel eine spezifische elektrische Leitfähigkeit zwischen 10⁻² und 10³ Ω⁻¹·cm⁻¹ und eine Dichte zwischen 0,06 und 0,7 g/cm³ besitzt.

3. Brennstoffzelle nach Anspruch 1 oder 2, **dadurch gekennzeichnet**, daß das Kohlenstoff-Aerogel eine Schichtdicke ≥ 100 µm aufweist.

4. Brennstoffzelle nach einem der Ansprüche 1 bis 3, **dadurch gekennzeichnet**, daß die Kollektoren (16, 18) aus Graphitpapier oder Kohlenstoffgewebe bestehen.

5. Brennstoffzelle nach einem oder mehreren der Ansprüche 1 bis 4, **dadurch gekennzeichnet**, daß die Membran (14) eine Schichtdicke zwischen 5 und 20 µm aufweist.

6. Brennstoffzelle nach einem oder mehreren der Ansprüche 1 bis 5, **dadurch gekennzeichnet**, daß die Membran (14) im feuchten Zustand einen spezifischen elektrischen Widerstand < 10 Ω·cm besitzt.

7. Brennstoffzelle nach einem oder mehreren der Ansprüche 1 bis 6, **dadurch gekennzeichnet**, daß die Membran in einem durch Hochfrequenz, Mikrowellen oder einen Elektronen-Cyclotron-Resonanz-Sender angeregten Niederdruckplasma zwischen 10⁻⁴ und 10 mbar aus gasförmigen Monomeren hergestellt ist.

8. Brennstoffzelle nach einem oder mehreren der Ansprüche 1 bis 7, **dadurch gekennzeichnet**, daß der Platinkatalysator in einem durch Hochfrequenz, Mikrowellen oder einen Elektronen-Cyclotron-Resonanz-Sender angeregten Niederdruckplasma zwischen 10⁻⁴ und 10 mbar aus gasförmigen Platinverbindungen hergestellt ist und einen spezifischen elektrischen Widerstand < 1 mΩ·cm besitzt.

9. Brennstoffzelle nach einem oder mehreren der Ansprüche 1 bis 8, **dadurch gekennzeichnet**, daß die beiden Kollektoren (16, 18) eine unterschiedliche Größe haben.

## Claims

1. Fuel cell with a proton-conducting membrane, on which catalyst material and a collector are arranged on both sides, characterized in that
- on the side facing the membrane (14), the collectors (16, 18) are provided with an electrically conductive gas-permeable carbon aerogel with a surface roughness of < 2 µm,
- a catalyst layer (15, 17) of platinum or a platinum alloy is in each case applied to the carbon aerogel by material bonding,
- and a membrane (14), deposited by plasma-chemical means, with a layer thickness of between 3 and 50 µm, is located between the catalyst layers (15, 17).

2. Fuel cell according to Claim 1, characterized in that the carbon aerogel has an electrical conductivity of between 10⁻² and 10³ Ω⁻¹·cm⁻¹ and a density of between 0.06 and 0.7 g/cm³.

3. Fuel cell according to Claim 1 or 2, characterized in that the carbon aerogel has a layer thickness of ≥ 100 µm.

4. Fuel cell according to one of Claims 1 to 3, characterized in that the collectors (16, 18) consist of graphite paper or carbon fabric.

5. Fuel cell according to one or more of Claims 1 to 4, characterized in that the membrane (14) has a layer thickness of between 5 and 20 µm.

6. Fuel cell according to one or more of Claims 1 to 5, characterized in that, in the wet state, the membrane (14) has an electrical resistivity of < 10 Ω·cm.

7. Fuel cell according to one or more of Claims 1 to 6, characterized in that the membrane is produced from gaseous monomers in a low-pressure plasma, between 10⁻⁴ and 10 mbar, excited by radio-frequency, microwaves or an electron cyclotron resonance transmitter.

8. Fuel cell according to one or more of Claims 1 to 7, characterized in that the platinum catalyst is produced from gaseous platinum compounds in a low-pressure plasma, between 10⁻⁴ and 10 mbar, excited by radio-frequency, microwaves or an electron cyclotron resonance transmitter, and has an electrical resistivity of < 1 mΩ·cm.

9. Fuel cell according to one or more of Claims 1 to 8, characterized in that the two collectors (16, 18) are of different size.

## Revendications

1. Pile à combustible avec une membrane conduisant les protons, sur les deux côtés de laquelle sont situés un matériau catalyseur et, à chaque fois, un collecteur, caractérisée
- en ce que les collecteurs (16, 18) sont pourvus, sur le côté tourné vers la membrane (14), d'un aérogel au carbone perméable au gaz, électroconducteur, et ayant une rugosité inférieure à 2 µm,
- en ce qu'une couche de catalyseur (15, 17) faite de platine ou d'un alliage de platine est, à chaque fois, appliquée sur l'aérogel au carbone d'une manière assurant un contact intime entre les deux,
- et en ce qu'une membrane (14) dont l'épaisseur de couche est comprise entre 3 et 50 µm et qui est déposée sous plasma chimique est située entre les couches de catalyseur (15, 17).

2. Pile à combustible selon la revendication 1, caractérisée en ce que l'aérogel au carbone possède une conductivité spécifique comprise entre 10⁻² et 10³ Ω⁻¹.cm⁻¹ et une densité comprise entre 0,06 et 0,7 g/cm³.

3. Pile à combustible selon l'une des revendications 1 ou 2, caractérisée en ce que l'aérogel au carbone a une épaisseur de couche supérieure ou égale à 100 µm.

4. Pile à combustible selon l'une des revendications 1 à 3, caractérisée en ce que les collecteurs (16, 18) sont formés de papier au graphite ou de tissu carboné.

5. Pile à combustible selon l'une ou plusieurs des revendications 1 à 4, caractérisée en ce que la membrane (14) a une épaisseur de couche comprise entre 5 et 20 µm.

6. Pile à combustible selon l'une ou plusieurs des revendications 1 à 5, caractérisée en ce que la membrane (14) possède, à l'état humide, une résistance spécifique inférieure à 10 Ω.cm.

7. Pile à combustible selon l'une ou plusieurs des revendications 1 à 6, caractérisée en ce que la membrane est fabriquée à partir de monomères gazeux dans un plasma basse pression entre 10⁻⁴ et 10 mbar qui est excité par une haute fréquence, des micro-ondes ou un émetteur ECR (electron cyclotron resonance).

8. Pile à combustible selon l'une ou plusieurs des revendications 1 à 7, caractérisée en ce que le catalyseur au platine est fabriqué à partir de composés au platine gazeux dans un plasma basse pression entre 10⁻⁴ et 10 mbar qui est excité par une haute fréquence, des micro-ondes ou un émetteur ECR (electron cyclotron resonance), et a une résistance spécifique inférieure à 1 mΩ.cm.

9. Pile à combustible selon l'une ou plusieurs des revendications 1 à 8, caractérisée en ce que les deux collecteurs (16, 18) ont une taille différente.
